# EUROPEAN PATENT SPECIFICATION

(11) **EP 3 142 220 B1**
(45) Date of publication and mention of the grant of the patent: **07.08.2019**
(21) Application number: 15859893.8
(22) Date of filing: 11.03.2015
(51) Int. Cl.: H02J 7/02, H01M 10/44

(54) **POWER ADAPTER AND TERMINAL**
NETZADAPTER UND ANSCHLUSS
ADAPTATEUR D'ALIMENTATION ET TERMINAL

(30) Priority: 11.11.2014 WO PCT/CN2014/090845; 11.11.2014 WO PCT/CN2014/090846; 11.11.2014 WO PCT/CN2014/090847
(43) Date of publication of application: 15.03.2017
(73) Proprietor: Guangdong Oppo Mobile Telecommunications Corp., Ltd, Dongguan, Guangdong 523860 (CN)
(72) Inventor: ZHANG, Jialiang, Dongguan Guangdong 523860 (CN)
(74) Representative: Mewburn Ellis LLP
(86) International application number: PCT/CN2015/074049
(87) International publication number: WO 2016/074390

(56) References cited:
- EP-A1- 3 101 766
- EP-A2- 2 892 214
- CN-A- 101 355 259
- CN-A- 102 957 193
- CN-A- 103 762 702
- CN-A- 103 779 907
- CN-A- 104 065 147
- CN-A- 104 124 483
- CN-A- 104 124 483
- CN-A- 104 135 057
- CN-U- 203 722 283
- US-A1- 2006 284 595
- US-A1- 2007 075 680
- US-A1- 2014 300 321

## Description

### TECHNICAL FIELD

The present disclosure relates to charging field, and particularly to a power adapter and a terminal.

### BACKGROUND

In recent years, mobile phone (such as smart phone) is becoming more and more popular because of its intelligence and powerful functionality. Typically, the mobile phone needs to be charged frequently because of high power consumption. At the same time, as battery capacity increasing, charging time thereof is becoming longer. In this way, there arises the need for quick charging.

In related arts, in order to realize quick charging, an output current or output voltage of a power adapter will be increased directly without taking into account the capacity of the mobile phone. This may lead to the mobile phone overheating or even burning, thus the service life of the mobile phone will be reduced.

US 2014/0300321 A1 discloses a power adapter which exchanges information with the terminal.

EP 3 101 766 A1 discloses another power adapter for charging a terminal.

### SUMMARY

The present disclosure provides a power adapter and a terminal, which can effectively avoid the heating or even burning phenomena of a mobile phone caused by aimless increase of the output current or output voltage of the power adapter.

According to a first aspect of the present disclosure, it is provided a power adapter. The power adapter includes a power conversion unit and a charging interface, the power conversion unit charges a terminal via the charging interface. The power adapter further includes: a communication unit, configured to perform two-way communication with the terminal via the charging interface so as to determine a charging mode of the terminal; a voltage control unit and/or current control unit, configured to control an output voltage and/or output current of the power conversion unit according to the charging mode determined by the communication unit. The communication unit is configured to transmit a query message to the terminal, and then receive a feedback message returned by the terminal and determine the charging mode of the terminal according to the feedback message.

Based on the first aspect, in an implementation, the charging mode includes a normal charging mode and a first quick charging mode; a charging current of the power adapter is higher in the first quick charging mode than in the normal charging mode.

Based on the first aspect and the above-mentioned implementation, in another implementation, in the first quick charging mode, the charging current of the power adapter is higher than 2.5A, or, a rated output current of the power adapter is higher than 2.5A.

Based on the first aspect and any of the above-mentioned implementations, in another implementation, the charging mode includes a normal charging mode and a second quick charging mode; a charging voltage of the power adapter is higher in the second quick charging mode than in the normal charging mode.

Based on the first aspect and any of the above-mentioned implementations, in another implementation, in the second quick charging mode, the charging voltage of the power adapter is 9V or 12V, or, rated output voltage of the power adapter is 5V, 9V, and/or 12V.

Based on the first aspect and any of the above-mentioned implementations, in another implementation, the charging mode includes a normal charging mode, a first quick charging mode, and a second quick charging mode; a charging current of the power adapter is higher in the first quick charging mode than in the normal charging mode, and a charging voltage of the power adapter is higher in the second quick charging mode than in the normal charging mode. The voltage control unit is configured to adjust the output voltage of the power conversion unit to obtain a charging current corresponding to the first quick charging mode if the charging mode determined by the communication unit and the terminal is the first quick charging mode; the current control unit is configured to adjust the output current of the power conversion unit to a charging current corresponding to the second quick charging mode if the charging mode determined by the communication unit and the terminal is the second quick charging mode.

Based on the first aspect and any of the above-mentioned implementations, in another implementation, the charging interface of the power adapter and a charging cable connecting the power adapter and the terminal adopt a separated design. The power adapter further includes: an identification unit, configured to identify a charging mode supported by the charging cable; the communication unit is further configured to determine the charging mode of the terminal according to the charging mode supported by the charging cable identified by the identification unit.

Based on the first aspect and any of the above-mentioned implementations, in another implementation, the identification unit is configured to transmit an identification code to a control chip in the charging cable, and then receive a feedback code returned from the control chip and determine whether the feedback code is correct; it is determined that the charging cable supports quick charging if the feedback code is correct, and it is determined that the charging cable does not support quick charging if the feedback code is incorrect.

Based on the first aspect and any of the above-mentioned implementations, in another implementation, the charging mode includes a normal charging mode and a quick charging mode, a charging current of the power adapter is higher in the quick charging mode than in the normal charging mode; the communication unit is configured to determine that a final charging mode is the quick charging mode, if the charging mode determined by the communication unit and the terminal is the quick charging mode and the quick charging mode is supported by the charging cable; otherwise, determine that the final charging mode is the normal charging mode.

Based on the first aspect and any of the above-mentioned implementations, in another implementation, the charging interface and the charging cable use a USB Type-A interface for connection.

Based on the first aspect and any of the above-mentioned implementations, in another implementation, the query message includes at least one of the following information: information for inquiring whether the terminal supports the quick charging mode; information for inquiring a path impedance magnitude of the terminal; information for inquiring whether the voltage output by the power adapter is equal to a battery voltage of the terminal; information for inquiring a maximum charge current allowed by the terminal; and information for inquiring the battery voltage of the terminal at present or whether a battery of the terminal supports quick charging.

According to a second aspect of the present disclosure, it is provided a terminal. The terminal includes a battery and a charging interface. The terminal introduces charging current from a power adapter via the charging interface so as to charge the battery. The terminal further includes: a communication unit, configured to perform two-way communication with the power adapter via the charging interface such that the power adapter can determine a charging mode of the terminal. The communication unit is configured to receive a query message transmitted from the power adapter and transmit a feedback message to the power adapter.

Based on the second aspect, in an implementation, the charging mode includes a normal charging mode and a first quick charging mode; a charging current is higher in the first quick charging mode than in the normal charging mode.

Based on the second aspect and the above-mentioned implementations, in another implementation, in the first quick charging mode, the charging current is higher than 2.5A.

Based on the second aspect and any of the above-mentioned implementations, in another implementation, the charging mode includes a normal charging mode and a second quick charging mode; a charging voltage is higher in the second quick charging mode than in the normal charging mode.

Based on the second aspect and any of the above-mentioned implementations, in another implementation, in the second quick charging mode, the charging voltage of the power adapter is 9V or 12V.

Based on the second aspect and any of the above-mentioned implementations, in another implementation, the feedback message includes at least one of the following information: information for indicating whether the terminal supports a quick charging mode; information for indicating a path impedance magnitude of the terminal; information for indicating whether the voltage output by the power adapter is equal to a battery voltage in the terminal; information for indicating a maximum charge current allowed by the terminal; and information for indicating the battery voltage of the terminal at present or whether the battery of the terminal supports quick charging.

In the technical schemes of the present disclosure, the power adapter can negotiate with the terminal about the charging mode via the communication unit, and the power adapter can control the output voltage/output current thereof according to the charging mode determined by the communication unit, whereby effectively avoid heating or even burning phenomena of a mobile phone caused by aimless increase of the output current or output voltage of the power adapter.

### BRIEF DESCRIPTION OF THE DRAWINGS

In order to illustrate the technical solutions of the present disclosure or the related art more clearly, a brief description of the accompanying drawings used herein is given below. Obviously, the drawings listed below are only examples, and a person skilled in the art should be noted that, other drawings can also be obtained on the basis of these exemplary drawings without creative work.
FIG. 1 is a schematic block diagram illustrating a power adapter according to an embodiment of the present disclosure.
FIG. 2 is a schematic block diagram illustrating a terminal according to an embodiment of the present disclosure.
FIG. 3 is a schematic diagram illustrating a quick charging structure according to an embodiment of the present disclosure.
FIG. 4 is a schematic diagram illustrating a communication mode between the power adapter and the terminal according to an embodiment of the present disclosure.
FIG. 5 is a schematic diagram illustrating a communication process between the power adapter and the terminal according to an embodiment of the present disclosure.
FIG. 6 is schematic diagram illustrating a cable structure according to an embodiment of the present disclosure.

### DETAILED DESCRIPTION OF ILLUSTRATED EMBODIMENTS

Technical solutions of embodiments of the present disclosure will now be described clearly and completely taken in conjunction with the accompanying drawings; it will be apparent to one of ordinary skill in the art that, the embodiments described below are merely a part of the disclosure and other embodiments obtained out of them without creative work will fall into the protection range of the present disclosure either.

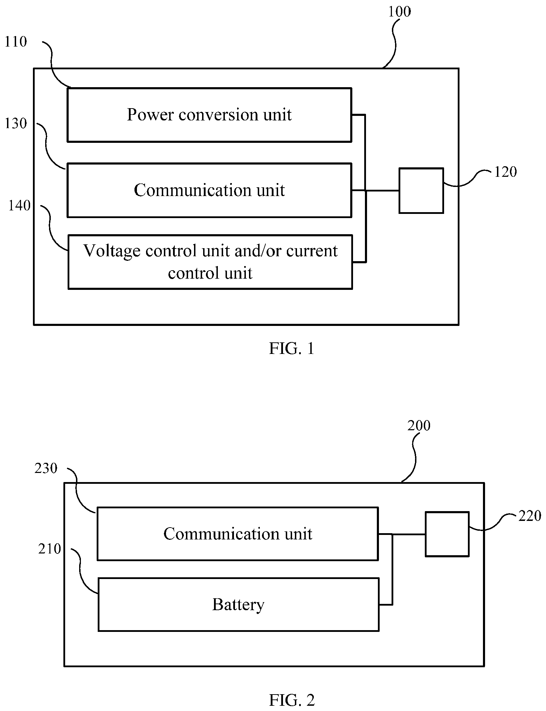

FIG. 1 is a schematic block diagram illustrating a power adapter according to an embodiment of the present disclosure. As shown in FIG. 1, a power adapter 100 includes a power conversion unit 110 and a charging interface 120. The power conversion unit 110 charges a terminal via the charging interface 120.

The power adapter 100 further includes a communication unit 130 and a voltage control unit and/or current control unit 140. The communication unit 130 is configured to perform two-way (in other words, two-way) communication with the terminal via the charging interface 120 so as to determine a charging mode of the terminal. The voltage control unit and/or current control unit 140 is configured to control an output voltage and/or output current of the power conversion unit 110 according to the charging mode determined by the communication unit 130.

In the embodiment, the power adapter can negotiate with the terminal about the charging mode via the communication unit, and the power adapter can control the output voltage/output current thereof according to the charging mode determined by the communication unit, whereby effectively avoid heating or even burning phenomena of a mobile phone caused by aimless increase of the output current or output voltage of the power adapter.

As an example, the charging mode includes a normal charging mode and a first quick charging mode. A charging current of the power adapter 100 is higher in the first quick charging mode than in the normal charging mode.

Specifically, in the first quick charging mode, charging power and speed of the terminal can be improved by increasing the output current (for example, greater than 2.5A) of the power adapter. In the normal charging mode, a rated output voltage of the power adapter can be 5V, and a rated output current of the power adapter can be less than or equal to 2.5A.

Optionally, in an embodiment, in the first quick charging mode, charging current of the power adapter 100 can be greater than 2.5A (for example, can be 5A), with a tolerance of ±5%. Or, the rated output current of the power adapter is greater than 2.5A.

In an example, the charging mode includes a normal charging mode and a second quick charging mode. A charging voltage of the power adapter 100 is higher in the second quick charging mode than in the normal charging mode.

Specifically, in an embodiment, in the second quick charging mode, the charging power and speed of the terminal can be improved by increasing the output voltage (for example, 9V or 12V) of the power adapter.

Optionally, in an embodiment, in the second quick charging mode, the charging voltage of the power adapter 100 is 9V or 12V; or, the rated output voltage of the power adapter 100 is 5V, 9V, and/or 12V, with a tolerance of ±5%.

As an example, the charging mode includes a normal charging mode, a first quick charging mode, and a second quick charging mode. The charging current of the power adapter 100 is higher in the first quick charging mode than in the normal charging mode, and the charging voltage of the power adapter 100 is higher in the second quick charging mode than in the normal charging mode. The voltage control unit is configured to adjust the output voltage of the power conversion unit 110 to the charging current corresponding to the first quick charging mode, if the charging mode determined by the communication unit 130 and the terminal is the first quick charging mode; the current control unit is configured to adjust the output current of the power conversion unit 110 to the charging current corresponding to the second quick charging mode, if the charging mode determined by the communication unit 130 and the terminal is the second quick charging mode.

In one implementation, the charging interface 120 of the power adapter 100 and a charging cable connecting the power adapter 100 and the terminal adopt a separated design. The power adapter 100 further includes: an identification unit, configured to identify a charging mode supported by the charging cable; the communication unit 130 is further configured to determine the charging mode of the terminal according to the charging mode supported by the charging cable identified by the identification unit.

In an embodiment, the identification unit is configured to transmit an identification code to a control chip in the charging cable, and then receive a feedback code returned from the control chip and determine whether the feedback code is correct; it is determined that the charging cable supports quick charging if the feedback code is correct, and it is determined that the charging cable does not support quick charging if the feedback code is incorrect.

As an example, the charging mode includes a normal charging mode and a quick charging mode, charging current of the power adapter 100 is higher in the quick charging mode than in the normal charging mode; the communication unit 130 is configured to determine that a final charging mode is the quick charging mode, if the charging mode of the terminal determined by the communication unit 130 is the quick charging mode and the quick charging mode is supported by the charging cable; otherwise, determine that the final charging mode is the normal charging mode.

Optionally, in an embodiment, the charging interface 120 and the charging cable use a USB A-type interface for connection.

Specifically, in an embodiment, the communication unit 130 is configured to transmit a query message to the terminal, and then receive a feedback message returned by the terminal and determine the charging mode of the terminal according to the feedback message. The query message includes at least one of the following information: information for inquiring whether the terminal supports the quick charging mode; information for inquiring a path impedance magnitude of the terminal; information for inquiring whether the voltage output by the power adapter 100 is equal to a battery voltage of the terminal; information for inquiring a maximum charge current allowed by the terminal; and information for inquiring the battery voltage of the terminal at present or whether a battery of the terminal supports quick charging.

Furthermore, the power adapter can be required to meet the following electrical performance requirements:

**Output voltage ripple**

| Input voltage | Simulated load test condition | Output ripple limit |
|---|---|---|
| 100-240Vac/50-60Hz | 0-reference output current | ≤ 200mV peak to peak value |

**Short-circuit current**

| Input voltage | Simulated load test condition | Short-circuit current limit |
|---|---|---|
| 100-240Vac/50-60Hz | Short -circuit | Less than 1.5 times the rated output current, and no more than 2500mA |

Regardless of whether the power adapter is plugged into the power supply, current flowing from the terminal to the power adapter should be no greater than 5mA.

Touch current flowing from an alternating current (AC) power supply to an output port via the power adapter should not be greater than 20uA.

Safety performance should be in line with the requirements of GB 4943.1.

Furthermore, the quick charging power adapter can possess functions of identifying a quick charging data line and detecting abnormal interface plug-in. The quick charging power adapter should have automatic protection function of a short circuit. And the power adapter should be able to resume work automatically after trouble shooting.

Moreover, there can be some requirements for the energy efficiency of the power adapter. For example, the actual average efficiency of the power adapter should meet the following condition:

### Average efficiency ≥ 0.0750^{∗}Ln(Pno)+0.561

Wherein "Pno" refers to the rated output power (that is, rated output voltage multiplied by rated output current) of the power adapter.

**Energy consumption without load**

| Input voltage | Simulated load test condition | Power consumption limit |
|---|---|---|
| 220V/50Hz | Open-circuit | Less than 150mW |

As to plug force and plug life, the following conditions shall be satisfied:

With regard to plug operation between a connecting plug and a connecting socket, if plug rate is no more than 12.5mm/min, the force required for inserting the connecting plug into the connecting socket completely should be no more than 35N, and the fore required for pulling the connecting plug out of the connecting socket completely should be no less than 10N.

Assume 200 plug-in/plug-out cycles per hour, mechanical structure should not be damaged after 3000 cycles performed at the maximum rate, and the force required for pulling the connecting plug out of the connecting socket completely should be no less than 8N.

FIG. 2 is a schematic block diagram illustrating a terminal according to an embodiment of the present disclosure. As shown in FIG. 2, a terminal 200 includes a battery 219 and a charging interface 220. The terminal 200 introduces charging current from a power adapter via the charging interface 220 so as to charge the battery 210.

The terminal 200 further includes: a communication unit 230, configured to perform two-way communication with the power adapter via the charging interface 220 such that the power adapter can determine a charging mode of the terminal 200.

In this embodiment, the power adapter can negotiate with the terminal about the charging mode via the communication unit, and the power adapter can control the output voltage/output current thereof according to the charging mode determined by the communication unit, whereby effectively avoid heating or even burning phenomena of a mobile phone caused by aimless increase of the output current or output voltage of the power adapter.

The charging interface of the terminal can be compatible with Micro-USB Type-B or Type-C interface specification.

The terminal shall meet the following electrical performance requirements: the charging interface and charging control circuit should be able to charge normally and safely according to their own needs; the maximum temperature of the terminal should be no higher than 55°Cduring a charging process and phenomenon such as fire, explosion, and circuit damage should not occur.

Moreover, there can be an overvoltage protection device in a charging control circuit within the terminal. The overvoltage protection device will be started if the charging voltage is higher than 12V (to be determined). During boot up of the overvoltage protection device, absorbing current thereof should be no more than 20mA. The maximum temperature of the terminal should be no higher than 55°C throughout the process; phenomenon such as fire, explosion, and circuit damage should not occur. The terminal should be able to work properly after recovery.

Terminal with quick charging function should be able to identify whether the power adapter meet quick charging requirements, can monitor the entire charging process in real time and adopt a corresponding charging mode.

As an example, the charging mode includes a normal charging mode and a first quick charging mode; a charging current is higher in the first quick charging mode than in the normal charging mode.

In the first quick charging mode, for example, the charging current is higher than 2.5A.

As an example, the charging mode includes a normal charging mode and a second quick charging mode; a charging voltage is higher in the second quick charging mode than in the normal charging mode.

In the second quick charging mode, for example, the charging voltage of the power adapter is 9V or 12V.

In an embodiment, the communication unit is configured to receive a query message transmitted from the power adapter and transmit a feedback message to the power adapter, wherein the feedback message includes at least one of the following information: information for indicating whether the terminal 200 supports quick charging; information for indicating a path impedance magnitude of the terminal 200; information for indicating whether the voltage output by the power adapter is equal to the voltage of the battery 210 in the terminal 200; information for indicating a maximum charge current allowed by the terminal 200; and information for indicating the voltage of the battery 210 of the terminal 200 at present or whether the battery 210 of the terminal 200 supports quick charging.

The battery in the terminal can meet the following requirements and have the following functions:
1) The battery can read voltage and current values of an electric core in real time and transmit the values to the terminal accurately; wherein the deviation of voltage and current is not allowed to exceed a charge limit of the electric core.
2) In the process of charging, temperature rise of various components of the battery should be no more than 15°C.
3) With regard to cycle life of the battery, under conditions of temperature upper limit and lower limit, quick charging life test should satisfy requirements as follows: a capacity retention rate should be higher than 80% after 500 cycles.
4) Actual capacity is equal to or higher than rated capacity.
5) GB 31241 requirement is met.
6) The battery should have overvoltage protection function of two-level protection so as to prevent overvoltage of the charging of the electric core. If the voltage of the electric core of the battery is higher than a rated voltage value (for example, the voltage of the electric core = rated voltage value +0.1V, currently, 4.4V; and to be determined in the future), a charging path of a battery protection board should be able to automatically cut off so as to start over an overvoltage protection mechanism.

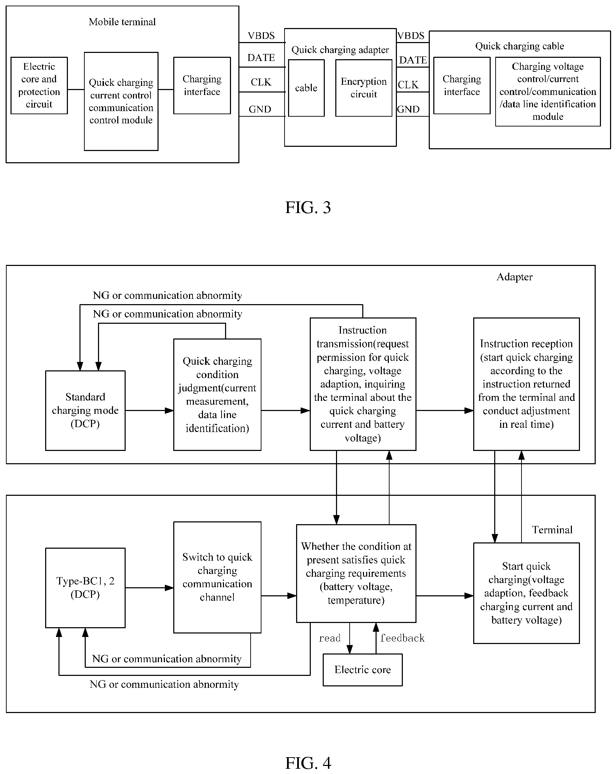

Embodiments of the present disclosure will be described in detail combined with specific examples. Examples illustrated in FIG. 3-FIG. 6 are used to help technical personnel in the field to understand embodiments of the present disclosure, and not intend to limit the embodiments of the present disclosure to a specific value or a specific scene illustrated. Various equivalent modifications and variations made according to the examples illustrated in FIG. 3-FIG. 6 shall fall into the protection range of the present disclosure.

FIG. 3 illustrates a quick charging system framework. As shown in FIG. 3, the quick charging system includes: a mobile terminal including a battery, a quick charging cable, and a quick charging adapter. The mobile terminal typically includes an electric core and a protection circuit thereof, a quick charging current control circuit module, a communication control module, and a charging interface. An encryption circuit module for identification of the power adapter and the terminal can be arranged in the charging cable, and specific implementations of the encryption circuit module can be set by manufactures. The quick charging adapter includes a charging interface, and a charging voltage control/current control /communication/data line identification module. After handshake communication between the terminal and the adapter, it will be determined that whether quick charging functional requirements are satisfied, and then a suitable quick charging mode will be determined. After that, the power adapter will supply corresponding voltage and current in order to charge the terminal. The power adapter and the charging cable adopt a separated design, and a USB Type-A interface can be used for connection.

The design of the charging adapter can take into account the vertical and horizontal compatibility of the product. Among which the horizontal compatibility means that the quick charging adapter should be able to identify whether the cable and the terminal meet quick charging requirements and take a corresponding charging mode; moreover, the terminal with quick charging function should be able to identify whether the adapter meets quick charging requirements and take a corresponding charging mode. The horizontal compatibility means that the adapter with quick charging function should be able to provide corresponding quick charging for all terminals with quick charging function; on the other hand, the terminal with quick charging function should be able to identify all adapters with quick charging function and perform quick charging.

FIG. 4 is a schematic diagram illustrating a quick charging communication process. In FIG. 4, instructions transmitted by the adapter (in the following, transmitted instruction) and instructions returned by the mobile terminal (in the following, returned instruction) are open to various interpretations. Examples are illustrated below, but the present disclosure is not limited thereto.
1) Transmitted instruction 1: used for the adapter to inquiry the terminal whether quick charging is allowed and inquiry a path impedance magnitude of the terminal; returned instruction 1: used for the terminal to feedback to the adapter whether the terminal supports quick charging and the path impedance magnitude of the terminal.
2) Transmitted instruction 2: used for the adapter to inquiry whether the voltage of the adapter at present matches (in other words, equals to) a battery voltage; returned instruction 2: used for the terminal to feedback to the adapter that the voltage of the adapter at present is higher than, equal to, or less than the battery voltage.
3) Transmitted instruction 3: used for the adapter to inquiry the terminal about a maximum charge current allowed at present; returned instruction 3: used for the terminal to feedback the maximum charge current allowed at present to the adapter.
4) Transmitted instruction 4: used for the adapter to inquiry a battery voltage of the terminal at present and whether quick charging is allowed; returned instruction 4: used for the adapter to feedback the battery voltage at present and whether quick charging can be launched to the terminal.

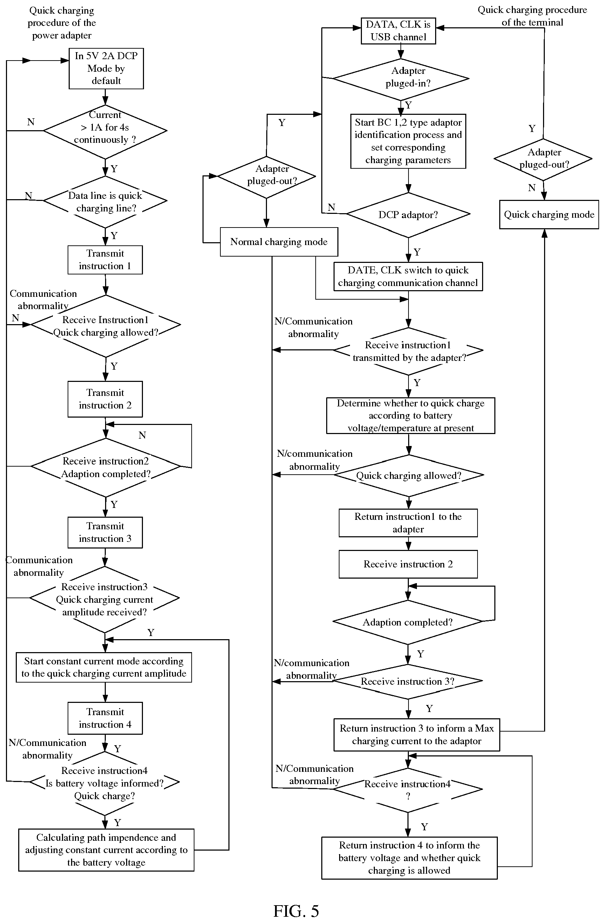

FIG. 5 is a schematic flow chart illustrating a process of determining the quick charging mode via bidirectional communication between the power adapter and the terminal. In FIG. 5, communication processes of the power adapter are shown on the left, and communication processes of the terminal are shown on the right. Each instruction in interaction in FIG. 5 can be defined as follows.

Transmitted instruction 1: used for the adapter to inquiry the terminal whether quick charging is allowed and inquiry a path impedance magnitude of the terminal.

Returned instruction 1: used for the terminal to inform the adapter whether quick charging is allowed and the path impedance magnitude of the terminal.

Transmitted instruction 2: used for the adapter to inquiry whether the voltage of the adapter at present equals to a battery voltage.

Returned instruction 2: used for the terminal to inform the adapter that the voltage of the adapter at present is higher than, equal to, or less than the battery voltage.

Transmitted instruction 3: used for the adapter to inquiry about a maximum charge current allowed by the terminal at present.

Returned instruction 3: used for the terminal to inform the adapter the maximum charge current allowed at present.

Transmitted instruction 4: used for the adapter to inquiry a battery voltage of the terminal at present and whether quick charging is allowed.

Returned instruction 4: used for the adapter to inform the terminal the battery voltage at present and whether quick charging can be launched.

Furthermore, the structure and material of the cable between the terminal and the power adapter can be required to meet the following requirements or indexes.

1. USB Type-A structure should be adopted at the input end of the cable, Micro-USB Type-B or Type-C interface specification should be compatible at the output end of the cable.

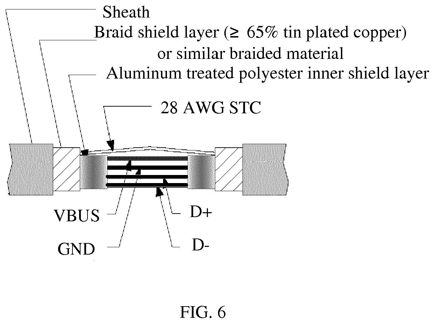

The structure of the connecting cable used for data transmission and power supply function should comply with the requirements illustrated in FIG. 6 (as same as the connecting cable of USB Type-A). The connecting cable is composed of four wires, two of them are power supply wires (VBUS is the positive electrode of the power supply, while GND is the negative electrode of the power supply), and the other two are signal wires.

The material of the cable should meet the requirements of GB/T 22727.1. In the material, Polycyclic Aromatic Hydrocarbons (PAHs) content is less than 200mg/kg, and Benzopyrene content is less than 20mg/kg.

The material can be made of polyethylene (PE) or other preferred materials.

The length of the connecting cable should be less than 200cm.

The sheath should surround a fully shield power supply and signal line pair, and should be directly connected with an external shield of a tin plated copper wire.

Maximum resistance of a cable used for supporting quick charging with increasing voltage should be no more than 0.232 Ω/m.

Maximum resistance of a cable used for supporting quick charging with increasing current should be no more than 0.1 Ω/m.

Insulation resistance of a connecting interface of USB Type-A and Micro-USB Type B should be no less than 1000M Ω.

Insulation materials of the connecting interface of USB Type-A should be able to withstand an AC voltage effective value of 500V; insulation materials of the connecting interface of Micro-USB Type-B should be able to withstand an AC voltage effective value of 100V.

There should be no breakdown, spark, or arcing phenomenon in a voltage-withstand test lasted for 1min. Leakage should not exceed 0.5mA.

Flame retardancy of the insulation material of the cable (does not contain connector parts) should reach V-1 grade or better grades.

With regard to plug operation between a connecting plug and a connecting socket, if the plug rate is no more than 12.5mm/min, the force required for inserting the connecting plug into the connecting socket completely should be no more than 35N, and the force required for pulling the connecting plug out of the connecting socket completely should be no less than 10N.

The mechanical structure should not be damaged after 3000 cycles performed at a maximum rate of 200 plug-in/plug-out cycles per hour, and the force required for pulling the connecting plug out of the connecting socket completely should be no less than 8N.

A person skilled in the art will understand, exemplary units or algorithm steps described in any of the embodiments can be achieved via electronic hardware or a combination of electronic hardware and computer software. Whether hardware or software should be adopted depends on design constraints and specific application of technical schemes. Respective specific application can use different methods or manners to achieve the function described in the embodiments, which will fall into the protection scope of the present disclosure.

Specific operations of the device, system, and the unit or module can refer to corresponding description of method according to the embodiment.

Besides, the device, system, and method described herein can be achieved in other manners. Configurations of the device according to the embodiment described above are only exemplary; the division of units in the device is a kind of division according to logical function, therefore there can be other divisions in practice. For example, multiple units or components can be combined or integrated into another system; or, some features can be ignored while some units need not to be executed. On the other hand, various function units can be integrated into one processing unit; two or more than two units can be integrated into one unit; or, each unit is physically separate.

On the other hand, units or components illustrated as separated components can be physically separate, components illustrated as units can be physical units, that is, they can be located in one place, or can be dispersed in multiple network units. All or a part of the units or components illustrated above can be chosen to achieve the purpose of the present disclosure according to actual needs.

Furthermore, various function units can be integrated into one processing unit; two or more than two units can be integrated into one unit; or, each unit is physically separate.

Operations or functions of technical schemes according to embodiments of the present disclosure, which are achieved in the form of software functional units and can be sold or used as an independent product, can be stored in a computer readable storage medium. According to this, all or a part of the technical schemes of the present disclosure can be realized in the form of software products which can be stored in a storage medium. The storage medium includes USB disk, Read Only Memory (ROM), Random Access Memory (RAM), magnetic disk, CD, and any other medium that can be configured to store computer-readable program codes or instructions. The computer-readable program code, when executed on a data-processing apparatus (can be personal computer, server, or network equipment), adapted to perform all or a part of the methods as described in the above-mentioned embodiments

The foregoing descriptions are merely preferred embodiments of the present disclosure, rather than limiting the present disclosure. Various modifications and alterations may be made to the present disclosure for those skilled in the art.

## Claims

1. A power adapter (100), comprising a power conversion unit (110) and a charging interface (120), the power conversion unit (110) being configured to charge a terminal via the charging interface (120), wherein the power adapter (100) further comprises:
a communication unit (130), configured to perform two-way communication with the terminal via the charging interface (120) so as to determine a charging mode of the terminal, wherein the communication unit (130) is configured to transmit a query message to the terminal, and then receive a feedback message returned by the terminal and determine the charging mode of the terminal according to the feedback message; and
a voltage control unit and/or current control unit (140), configured to control an output voltage and/or output current of the power conversion unit (110) according to the charging mode determined by the communication unit (130);
wherein the query message comprises at least one of the following information:
information for inquiring whether the terminal meets the quick charging condition;
information for inquiring a path impedance magnitude of the terminal;
information for inquiring whether a voltage output by the power adapter (100) is matched with an input voltage applied to a battery of the terminal;
information for inquiring a maximum charge current allowed by the terminal; and
information for inquiring whether a current voltage of the battery of the terminal or the battery of the terminal meets the quick charging condition.

2. The power adapter (100) of claim 1, wherein the charging mode comprises a normal charging mode and a first quick charging mode; a charging current of the power adapter (100) is higher in the first quick charging mode than in the normal charging mode.

3. The power adapter (100) of claim 2, wherein in the first quick charging mode, the charging current of the power adapter (100) is higher than 2.5A, or, a rated output current of the power adapter is higher than 2.5A.

4. The power adapter (100) of any of claims 1-3, wherein the charging mode comprises a normal charging mode and a second quick charging mode; a charging voltage of the power adapter (100) is higher in the second quick charging mode than in the normal charging mode.

5. The power adapter (100) of claim 4, wherein in the second quick charging mode, the charging voltage of the power adapter (100) is 9V or 12V, or, a rated output voltage of the power adapter is 5V, 9V, and/or 12V.

6. The power adapter (100) of any of claims 1-5, wherein the charging mode comprises a normal charging mode, a first quick charging mode, and a second quick charging mode; a charging current of the power adapter (100) is higher in the first quick charging mode than in the normal charging mode, and a charging voltage of the power adapter (100) is higher in the second quick charging mode than in the normal charging mode;
the voltage control unit (140) is configured to adjust the output voltage of the power conversion unit (110) to obtain a charging current corresponding to the first quick charging mode if the charging mode determined by the communication unit (130) and the terminal is the first quick charging mode;
the current control unit (140) is configured to adjust the output current of the power conversion unit (110) to a charging current corresponding to the second quick charging mode if the charging mode determined by the communication unit (130) and the terminal is the second quick charging mode.

7. The power adapter (100) of any of claims 1-6, wherein the charging interface (120) of the power adapter (100) is coupled to the terminal via a charging cable therebetween;
the power adapter (100) further comprises:
an identification unit, configured to identify a charging mode supported by the charging cable;
the communication unit (130) is further configured to determine the charging mode of the terminal according to the charging mode supported by the charging cable identified by the identification unit.

8. The power adapter (100) of claim 7, wherein the identification unit is configured to transmit an identification query to a control chip in the charging cable, and then receive a feedback information returned from the control chip, and the identification unit judges whether the feedback information meets a predetermined condition; and
wherein when the feedback information returned from the control chip meets the predetermined condition, the identification unit determines that the charging cable supports quick charging mode.

9. The power adapter (100) of claim 7 or 8, wherein the charging mode comprises a normal charging mode and a quick charging mode, and a charging current of the power adapter (100) is higher in the quick charging mode than in the normal charging mode;
the communication unit is configured to determine that the charging mode of the terminal is the quick charging mode, and to determine that the quick charging mode is supported by the charging cable, then the voltage control unit and/or current control unit controls an output voltage and/or output current of the power conversion unit of the power adapter to charge the terminal according to the quick charging mode via the charging cable.

10. The power adapter (100) of any of claims 7-9, wherein the charging interface (120) and the port of the charging cable coupled to the charging interface are USB Type-A for connection.

11. A terminal (200), comprising a battery (219) and a charging interface (220), the terminal (200) being configured to introduce a charging current from a power adapter via the charging interface (220) to charge the battery (210) according to a charging mode of the terminal, wherein the terminal further comprises:
a communication unit (230), configured to perform two-way communication with the power adapter via the charging interface (220) to determine the charging mode of the terminal (200), wherein the communication unit is configured to receive a query message transmitted from the power adapter and transmit a feedback message to the power adapter;
wherein the feedback message comprises at least one of the following information:
information for indicating whether the terminal meets the quick charging condition;
information for indicating a path impedance magnitude of the terminal (200);
information for indicating whether a voltage output by the power adapter is matched with an input voltage applied to a battery of the terminal (200);
information for indicating a maximum charge current allowed by the terminal (200); and
information for indicating whether a current voltage of the battery of the terminal (200) or the battery of the terminal meets the quick charging condition.

12. The terminal (200) of claim 11, wherein the charging mode comprises a normal charging mode and a first quick charging mode; the charging current is higher in the first quick charging mode than in the normal charging mode.

13. The terminal (200) of claim 11 or 12, wherein the charging mode comprises a normal charging mode and a second quick charging mode; a charging voltage is higher in the second quick charging mode than in the normal charging mode.

## Patentansprüche

1. Netzteil (100), das eine Leistungswandlungseinheit (110) und eine Ladeschnittstelle (120) umfasst, wobei die Leistungswandlungseinheit (110) konfiguriert ist, um ein Endgerät über die Ladeschnittstelle (120) zu laden, wobei das Netzteil (100) ferner Folgendes umfasst:
eine Kommunikationseinheit (130), die konfiguriert ist, um Zwei-Wege-Kommunikation mit dem Endgerät über die Ladeschnittstelle (120) durchzuführen, um den Lademodus des Endgeräts zu bestimmen, wobei die Kommunikationseinheit (130) konfiguriert ist, um eine Anfragenachricht an das Endgerät zu übertragen und dann eine Rückmeldungsnachricht von dem Endgerät zu empfangen und den Lademodus des Endgeräts anhand der Rückmeldungsnachricht zu bestimmen; und
eine Spannungssteuereinheit und/oder Stromsteuereinheit (140), die konfiguriert ist, um eine Ausgangsspannung und/oder Ausgangsstrom der Leistungswandlungseinheit (110) gemäß dem durch die Kommunikationseinheit (130) bestimmten Lademodus zu steuern;
wobei die Anfragenachricht zumindest eine der folgenden Informationen umfasst:
Informationen, um abzufragen, ob das Endgerät die Schnellladebedingung erfüllt;
Informationen, um eine Pfadimpedanzgröße des Endgeräts abzufragen;
Informationen, um abzufragen, ob ein Spannungsausgang des Netzteils (100) an eine an die Batterie des Endgeräts angelegten Eingangsspannung angepasst ist;
Informationen, um einen durch das Endgerät zugelassenen maximalen Ladestrom abzufragen; und
Informationen, um abzufragen, ob eine aktuelle Spannung der Batterie des Endgeräts oder die Batterie des Endgeräts die Schnellladebedingung erfüllt.

2. Netzteil (100) nach Anspruch 1, wobei der Lademodus einen Normallademodus und einen ersten Schnelllademodus umfasst; ein Ladestrom des Netzteils (100) in dem ersten Schnelllademodus höher ist als in dem Normallademodus.

3. Netzteil (100) nach Anspruch 2, wobei in dem ersten Schnelllademodus der Ladestrom des Netzteils (100) höher als 2,5 A ist oder ein Nennausgangsstrom des Netzteils höher als 2,5 A ist.

4. Netzteil (100) nach einem der Ansprüche 1 bis 3, wobei der Lademodus einen Normallademodus und einen zweiten Schnelllademodus umfasst; eine Ladespannung des Netzteils (100) in dem zweiten Schnelllademodus höher ist als in dem Normallademodus.

5. Netzteil (100) nach Anspruch 4, wobei in dem zweiten Schnelllademodus die Ladespannung des Netzteils (100) 9 V oder 12 V beträgt oder eine Nennausgangsspannung des Netzteils 5 V, 9 V und/oder 12 V beträgt.

6. Netzteil (100) nach einem der Ansprüche 1 bis 5, wobei der Lademodus einen Normallademodus, einen ersten Schnelllademodus und einen zweiten Schnelllademodus umfasst; ein Ladestrom des Netzteils (100) in dem ersten Schnelllademodus höher ist als in dem Normallademodus und eine Ladespannung des Netzteils (100) in dem zweiten Schnelllademodus höher ist als in dem Normallademodus;
die Spannungssteuereinheit (140) konfiguriert ist, um die Ausgangsspannung der Leistungswandlungseinheit (110) anzupassen, um einen Ladestrom zu erhalten, der dem ersten Schnelllademodus entspricht, wenn der durch die Kommunikationseinheit (130) und das Endgerät bestimmte Lademodus der erste Schnelllademodus ist;
die Stromsteuereinheit (140) konfiguriert ist, um den Ausgangsstrom der Leistungswandlungseinheit (110) an einen Ladestrom anzupassen, der dem zweiten Schnelllademodus entspricht, wenn der durch die Kommunikationseinheit (130) und das Endgerät bestimmte Lademodus der zweite Schnelllademodus ist.

7. Netzteil (100) nach einem der Ansprüche 1 bis 6, wobei die Ladeschnittstelle (120) des Netzteils (100) über ein Ladekabel mit dem Endgerät verbunden ist;
das Netzteil (100) ferner Folgendes umfasst:
eine Identifizierungseinheit, die konfiguriert ist, um einen durch das Ladekabel unterstützten Lademodus zu identifizieren;
wobei die Kommunikationseinheit (130) ferner konfiguriert ist, um den Lademodus des Endgeräts gemäß dem durch das Ladekabel unterstützten Lademodus, wie durch die Identifizierungseinheit identifiziert, zu bestimmen.

8. Netzteil (100) nach Anspruch 7, wobei die Identifizierungseinheit konfiguriert ist, um eine Identifizierungsanfrage an einen Steuerchip in dem Ladekabel zu übertragen und dann Rückmeldeinformationen von dem Steuerchip zu empfangen, und wobei die Identifizierungseinheit beurteilt, ob die Rückmeldeinformationen eine vorab festgelegte Bedingung erfüllen; und
wobei die Identifizierungseinheit bei Erfüllen der vorab festgelegten Bedingung durch die Rückmeldeinformationen von dem Steuerchip bestimmt, dass das Ladekabel den Schnelllademodus unterstützt.

9. Netzteil (100) nach Anspruch 7 oder 8, wobei der Lademodus einen Normallademodus und einen Schnelllademodus umfasst und ein Ladestrom des Netzteils (100) in dem Schnelllademodus höher ist als in dem Normallademodus;
wobei die Kommunikationseinheit konfiguriert ist, um zu bestimmen, dass der Lademodus des Endgeräts der Schnelllademodus ist, und zu bestimmen, dass der Schnelllademodus durch das Ladekabel unterstützt wird, wonach die Spannungssteuereinheit und/oder Stromsteuereinheit eine Ausgangsspannung und/oder einen Ausgangsstrom der Leistungswandlungseinheit des Netzteils steuert, um das Endgerät gemäß dem Schnelllademodus über das Ladekabel zu laden.

10. Netzteil (100) nach einem der Ansprüche 7 bis 9, wobei die Ladeschnittstelle (120) und der Anschluss des Ladekabels, der mit der Ladeschnittstelle verbunden ist, USB Typ-A zur Verbindung sind.

11. Endgerät (200), das eine Batterie (219) und eine Ladeschnittstelle (220) umfasst, wobei das Endgerät (200) konfiguriert ist, um einen Ladestrom von einem Netzteil über die Ladeschnittstelle (220) einzubringen, um die Batterie (210) gemäß einem Lademodus des Endgeräts zu laden, wobei das Endgerät ferner Folgendes umfasst:
eine Kommunikationseinheit (230), die konfiguriert ist, um Zwei-Wege-Kommunikation mit dem Netzteil über die Ladeschnittstelle (220) durchzuführen, um den Lademodus des Endgeräts (200) zu bestimmen, wobei die Kommunikationseinheit konfiguriert ist, um eine von dem Netzteil übertragene Anfragenachricht zu empfangen und eine Rückmeldenachricht an das Netzteil zu übertragen;
wobei die Rückmeldenachricht zumindest eine der folgenden Informationen umfasst:
Informationen, um anzugeben, ob das Endgerät die Schnellladebedingung erfüllt;
Informationen, um eine Pfadimpedanzgröße des Endgeräts (200) anzugeben;
Informationen, um anzugeben, ob ein Spannungsausgang des Netzteils zu einer an die Batterie des Endgeräts (200) angelegten Eingangsspannung passt;
Informationen, um einen durch das Endgerät (200) zugelassenen maximalen Ladestrom anzugeben; und
Informationen, um anzugeben, ob eine aktuelle Spannung der Batterie des Endgeräts (200) oder die Batterie des Endgeräts die Schnellladebedingung erfüllt.

12. Endgerät (200) nach Anspruch 11, wobei der Lademodus einen Normallademodus und einen ersten Schnelllademodus umfasst; der Ladestrom in dem ersten Schnelllademodus höher ist als in dem Normallademodus.

13. Endgerät (200) nach Anspruch 11 oder 12, wobei der Lademodus einen Normallademodus und einen zweiten Schnelllademodus umfasst; eine Ladespannung in dem zweiten Schnelllademodus höher ist als in dem Normallademodus.

## Revendications

1. Adaptateur d'alimentation (100), comprenant une unité de conversion de puissance (110) et une interface de charge (120), l'unité de conversion de puissance (110) étant configurée pour charger un terminal via l'interface de charge (120), dans lequel l'adaptateur d'alimentation (100) comprend en outre :
une unité de communication (130), configurée pour établir une communication bidirectionnelle avec le terminal via l'interface de charge (120) afin de déterminer un mode de charge du terminal, dans lequel l'unité de communication (130) est configurée pour transmettre un message de demande au terminal, puis recevoir un message de retour renvoyé par le terminal et déterminer le mode de charge du terminal en fonction du message de retour ; et
une unité de commande de tension et/ou une unité de commande de courant (140), configurée pour commander une tension de sortie et/ou un courant de sortie de l'unité de conversion de puissance (110) en fonction du mode de charge déterminé par l'unité de communication (130) ;
dans lequel le message de demande comprend au moins certaines des informations suivantes :
des informations pour rechercher si le terminal remplit la condition de charge rapide ;
des informations pour rechercher une amplitude d'impédance de trajet du terminal ;
des informations pour rechercher si une sortie de tension par l'adaptateur d'alimentation (100) correspond à une tension d'entrée appliquée à une batterie du terminal ;
des informations pour rechercher un courant de charge maximum autorisé par le terminal ; et
des informations pour rechercher si une tension de courant de la batterie du terminal ou si la batterie du terminal remplit la condition de charge rapide.

2. Adaptateur d'alimentation (100) selon la revendication 1, dans lequel le mode de charge comprend un mode de charge normale et un premier mode de charge rapide ; un courant de charge de l'adaptateur d'alimentation (100) est plus élevé dans le premier mode de charge rapide que dans le mode de charge normale.

3. Adaptateur d'alimentation (100) selon la revendication 2, dans lequel, dans le premier mode de charge rapide, le courant de charge de l'adaptateur d'alimentation (100) est supérieur à 2,5 A, ou, un courant de sortie nominal de l'adaptateur d'alimentation est supérieur à 2,5 A.

4. Adaptateur d'alimentation (100) selon l'une quelconque des revendications 1 à 3, dans lequel le mode de charge comprend un mode de charge normale et un second mode de charge rapide ; une tension de charge de l'adaptateur d'alimentation (100) est plus élevée dans le second mode de charge rapide que dans le mode de charge normale.

5. Adaptateur d'alimentation (100) selon la revendication 4, dans lequel, dans le second mode de charge rapide, la tension de charge de l'adaptateur d'alimentation (100) est de 9 V ou 12 V, ou, une tension de sortie nominale de l'adaptateur d'alimentation est de 5 V, 9 V, et/ou 12 V.

6. Adaptateur d'alimentation (100) selon l'une quelconque des revendications 1 à 5, dans lequel le mode de charge comprend un mode de charge normale, un premier mode de charge rapide, et un second mode de charge rapide ; un courant de charge de l'adaptateur d'alimentation (100) est plus élevé dans le premier mode de charge rapide que dans le mode de charge normale, et une tension de charge de l'adaptateur d'alimentation (100) est plus élevée dans le second mode de charge rapide que dans le mode de charge normale ;
l'unité de commande de tension (140) est configurée pour ajuster la tension de sortie de l'unité de conversion de puissance (110) pour obtenir un courant de charge correspondant au premier mode de charge rapide si le mode de charge déterminé par l'unité de communication (130) et le terminal est le premier mode de charge rapide ;
l'unité de commande de courant (140) est configurée pour ajuster le courant de sortie de l'unité de conversion de puissance (110) à un courant de charge correspondant au second mode de charge rapide si le mode de charge déterminé par l'unité de communication (130) et le terminal est le second mode de charge rapide.

7. Adaptateur d'alimentation (100) selon l'une quelconque des revendications 1 à 6, dans lequel l'interface de charge (120) de l'adaptateur d'alimentation (100) est couplée au terminal via un câble de charge situé entre eux ;
l'adaptateur d'alimentation (100) comprend en outre :
une unité d'identification, configurée pour identifier un mode de charge supporté par le câble de charge ;
l'unité de communication (130) est en outre configurée pour déterminer le mode de charge du terminal en fonction du mode de charge supporté par le câble de charge identifié par l'unité d'identification.

8. Adaptateur d'alimentation (100) selon la revendication 7, dans lequel l'unité d'identification est configurée pour transmettre une demande d'identification à une puce de commande dans le câble de charge, puis recevoir des informations de retour renvoyées par la puce de commande, et l'unité d'identification juge si les informations de retour répondent à une condition prédéterminée ; et
dans lequel lorsque les informations de retour renvoyées par la puce de commande remplissent la condition prédéterminée, l'unité d'identification détermine que le câble de charge supporte le mode de charge rapide.

9. Adaptateur d'alimentation (100) selon la revendication 7 ou 8, dans lequel le mode de charge comprend un mode de charge normale et un mode de charge rapide, et un courant de charge de l'adaptateur d'alimentation (100) est plus élevé dans le mode de charge rapide que dans le mode de charge normale ;
l'unité de communication est configurée pour déterminer que le mode de charge du terminal est le mode de charge rapide, et pour déterminer que le mode de charge rapide est supporté par le câble de charge, puis l'unité de commande de tension et/ou l'unité de commande de courant commande une tension de sortie et/ou un courant de sortie de l'unité de conversion de puissance de l'adaptateur d'alimentation pour charger le terminal en fonction du mode de charge rapide via le câble de charge.

10. Adaptateur d'alimentation (100) selon l'une quelconque des revendications 7 à 9, dans lequel l'interface de charge (120) et le port du câble de charge couplé à l'interface de charge sont des USB type-A pour connexion.

11. Terminal (200), comprenant une batterie (219) et une interface de charge (220), le terminal (200) étant configuré pour introduire un courant de charge à partir d'un adaptateur d'alimentation via l'interface de charge (220) pour charger la batterie (210) selon un mode de charge du terminal, dans lequel le terminal comprend en outre :
une unité de communication (230), configurée pour établir une communication bidirectionnelle avec l'adaptateur d'alimentation via l'interface de charge (220) afin de déterminer le mode de charge du terminal (200), dans lequel l'unité de communication est configurée pour recevoir un message de demande transmis par l'adaptateur d'alimentation et transmettre un message de retour à l'adaptateur d'alimentation ;
dans lequel le message de retour comprend au moins certaines des informations suivantes :
des informations pour indiquer si le terminal remplit la condition de charge rapide ;
des informations pour indiquer une amplitude d'impédance de trajet du terminal (200) ;
des informations pour indiquer si une sortie de tension par l'adaptateur d'alimentation correspond à une tension d'entrée appliquée à une batterie du terminal (200) ;
des informations pour indiquer un courant de charge maximum autorisé par le terminal (200) ; et
des informations pour indiquer si une tension de courant de la batterie du terminal (200) ou si la batterie du terminal remplit la condition de charge rapide.

12. Terminal (200) selon la revendication 11, dans lequel le mode de charge comprend un mode de charge normale et un premier mode de charge rapide ; le courant de charge est plus élevé dans le premier mode de charge rapide que dans le mode de charge normale.

13. Terminal (200) selon la revendication 11 ou 12, dans lequel le mode de charge comprend un mode de charge normale et un second mode de charge rapide ; une tension de charge est plus élevée dans le second mode de charge rapide que dans le mode de charge normale.
